# EUROPEAN PATENT APPLICATION

(11) **EP 1 658 958 A1**
(43) Date of publication of application: **24.05.2006**
(21) Application number: 05257149.4
(22) Date of filing: 21.11.2005
(51) Int. Cl.: B29D 11/00, B29C 33/20

(54) **Multistage ophthalmic lens demold**

(30) Priority: 22.11.2004 US 630099 P; 11.03.2005 US 78947
(71) Applicant: Johnson and Johnson Vision Care, Inc., Jacksonville, FL 32256 (US)
(72) Inventor: Knutzen, V. Josef, Jacksonville, Florida 32256 (US); Blake, Erik, Jacksonville, Florida 32246 (US)
(74) Representative: Mercer, Christopher Paul

(57) **Abstract**

The present invention discloses methods and apparatus for separating ophthalmic lens mold parts at multi velocities. In particular, the present invention discloses methods and apparatus for removing molded soft contact lenses, high-precision intraocular lenses and the like, from the individual molds in which they are produced. The present invention teaches multiple speed control of pry fingers to maximize efficiency of ophthalmic lens manufacturing and reduce damage to ophthalmic lenses that results from mold part separation.

## Description

### BACKGROUND OF THE INVENTION

### Field of the invention

The present invention relates generally to the production of ophthalmic lenses, and, in particular pertains to a method and a device for removing molded soft contact lenses, high-precision intraocular lenses and the like, from the individual molds in which they are produced. The present invention teaches multiple speed control of pry fingers to maximize efficiency of ophthalmic lens manufacturing and reduce damage to ophthalmic lenses that results from mold part separation.

### Discussion of the Prior Art

In view of the intense growth of the ophthalmic contact lens industry, it has become desirable and even necessary to be able to supply contact lenses that are periodically and frequently replaced in order to minimize the possibility of user induced contamination. This has created an opportunity for manufacturers to strive for automated methods and apparatuses that are able to automatically produce high quality ophthalmic lenses in a cost-effective and highly efficient manner.

It is currently the practice in the manufacturing technology for ophthalmic lenses, such as soft contact lenses of the hydrogel type, to form a monomer or monomer mixture that may be polymerized in a plastic mold. Details of typical direct mold processes for forming soft hydrogel contact lenses are described in U.S. Pat. Nos. 5,080,839, 5,039,459, 4,889,664, and 4,495,313. The process for forming soft contact lenses as generally described in the above-mentioned patents includes the steps of dissolving a monomer mixture in a non-aqueous, water-displaceable solvent and placing the monomer/solvent mixture in a mold having the shape of the final desired hydrogel lens. Thereafter, the monomer/solvent mixture is subjected to conditions whereby the monomer(s) polymerize, to thereby produce a polymer/solvent mixture in the general shape of the final desired hydrogel lens. After the polymerization is complete, the solvent is displaced with a solution to produce a hydrated lens whose final size and shape are similar to the shape of the original molded polymer/solvent article.

The mold disclosed in U.S. Pat. No. 4,640,489 is a two-piece mold with a female mold portion having a generally concave lens surface, and a male mold portion having a generally convex lens surface, both mold portions preferably made of a thermoplastic material such as polystyrene. In some embodiments, polystyrene and copolymers thereof are preferred mold materials because they do not crystallize during cooling from the melt, and exhibit little or no shrinkage when subject to the processing conditions required during the direct molding process discussed above. Other embodiments can include molds made of polyolefins such as polypropylenes or polyethylenes.

During a filling and assembly process, the monomer and monomer mixture is supplied in excess to the female concave mold portion prior to the mating of the molds. After the mold portions are placed together, defining the lens and forming a lens edge, the excess monomer or monomer mixture is expelled from the mold cavity and rests on or between flanges that surround one or both mold portions. Upon polymerization, this excess material forms an annular (HEMA) ring around the formed lens between the flange portions of the molds.

The materials, chemistry, and processes involved in the creation of the lens can be controlled so that the mold portions may be separated without damaging the lens. For example, in some embodiments, it is preferred to have the lens adhere to the front curve mold portion during separation. In such embodiments, the lens may be damaged if it sticks to back curve lens mold part.

A typical process for separating the mold portions and removing the lens therefrom includes a heating stage, a mold half separation stage, and a lens removal stage. The heating stage of the prior art lens removal process is to apply heated air or infrared energy to the back mold portion thereby causing a differential expansion between the heated mold polymer and the cooler lens polymer. This differential expansion provides a shearing impetus, which weakens the adhesion forces between the mold surface and the lens formed thereon.

The mold half separation stage, which in some embodiments can begin during a heating stage and in other embodiments follow a heating stage, is characterized by removal of a previously heated mold half with an automated means such as mechanical fingers which pry the mold halves apart. With respect to prior art systems for removing the back curve mold halves, inefficient separation means and damaging forces associated therewith have rendered such devices less desirable for producing high quality lenses. For example, if a demold pry is too fast or too slow, the demold process can result in edge defects or other damage to the lenses.

Therefore, there remains an unmet need for more efficient and safer processes to separate ophthalmic lens mold parts. This need and others are filled by the present invention.

### SUMMARY OF THE INVENTION

Accordingly, the present invention provides methods and apparatus that separates ophthalmic lens mold parts subsequent to polymerization of a contact forming monomer contained within the mold parts. The apparatus includes a first set of pry fingers and a second set of pry fingers and a positioning means for situating the first set of pry fingers and the second set of pry fingers between an upper mold part and a lower mold part joined that have been together through adhesion of an ophthalmic lens situated between the first and second mold part. The ophthalmic lens can be formed from a silicone based polymer.

The present invention provides a mechanized apparatus for moving at least one of the first set of pry fingers and the second set of pry fingers, apart from each other at a velocity specified by an automated controller. The automated controller causes the mechanized means to move at least one set of the first and second set of pry fingers apart from each other at a controlled first velocity up until a first predetermined distance, and a second velocity greater than the first velocity up until a second predetermined distance has been traveled. In some embodiments, the automated controller can also cause the mechanized apparatus to move the pry fingers apart at a third velocity greater than the second velocity and subsequent to the second predetermined distance being travelled.

Some embodiments can also include an upper mold part and a lower mold part that each include a circumferential edge portion and the first predetermined distance can be greater than the distance required to make the pry fingers contact each of the circumferential edge portions.

In another aspect, in various embodiments, the first predetermined distance can be greater than about 0.2 mm, or about between 2.3 to 2.8 mm and the second predetermined distance about between 2.3 - 2.8 mm.

In addition, in some embodiments, the first velocity can be about between 0.5 mm/sec and the second velocity can be about between 5-50 mm/sec, or the first velocity can be about between 3.0 mm/sec and 6.0 mm/sec and the second velocity can be about between 5.0 mm/sec and 50.0 mm/sec, or the third velocity can be about between 100 mm/sec and 1000 mm/sec.

In still another aspect, in various embodiments, the mechanized apparatus for moving the first and second set of pry fingers apart from each other at a velocity specified by an automated controller can be an electric powered stepper motor or an air powered stepper motor.

Some embodiments of the present invention include methods for separating first and second ophthalmic lens mold parts by depositing ophthalmic lens forming resin between a first mold part and second mold part and polymerizing the ophthalmic lens forming resin thereby causing the first mold part and the second mold part to adhere to each other.. A first second set of pry fingers are positioned between the first and second mold parts. At least of the first set of pry fingers and the second set of pry fingers are moved apart from each the other set at a controlled first velocity until a first predetermined distance has been traveled by at least one of the first set of pry fingers and the second set of pry fingers.

In addition, in some embodiments, the first set of pry fingers and the second set of pry fingers are moved apart from each other at a second controlled velocity that greater than the first controlled velocity up until a second predetermined distance has been traveled. Some embodiments include moving the first and second set of pry fingers apart from each other a third predetermined distance at a third velocity greater than the second velocity.

In another aspect, in some embodiments, movement of the sets of pry fingers can be performed by a mechanized apparatus that is controlled by a computer processor operative with software stored on a computer readable medium. Accordingly, the present invention can include computer apparatus to facilitate separation of a first mold part and a second mold part. The computer apparatus can include a computer processor operatively connected to a storage medium for digital data; and executable software stored on the storage medium and executable on demand. The software operative with the computer processor to cause ophthalmic lens processing stations to deposit ophthalmic lens forming resin between the first mold part and the second mold part and polymerize the ophthalmic lens forming resin thereby causing the first mold part and the second mold part to adhere to each other. The software can also cause ophthalmic lens processing stations to position a first set of pry fingers and the second set of pry fingers between the first mold part and the second mold part and move one or the other or both of the first set of pry fingers and the second set of pry fingers, apart from each other, at a controlled first velocity for a first predetermined distance and further move apart from each other at a controlled second velocity greater than the first velocity up until a second predetermined distance has been travelled.

It is to be understood that other embodiments of the present invention are described in the Figures, specification and claims contained herein.

### DESCRIPTION OF THE DRAWINGS

FIG. 1 illustrates a diagram of an ophthalmic lens mold and lens.

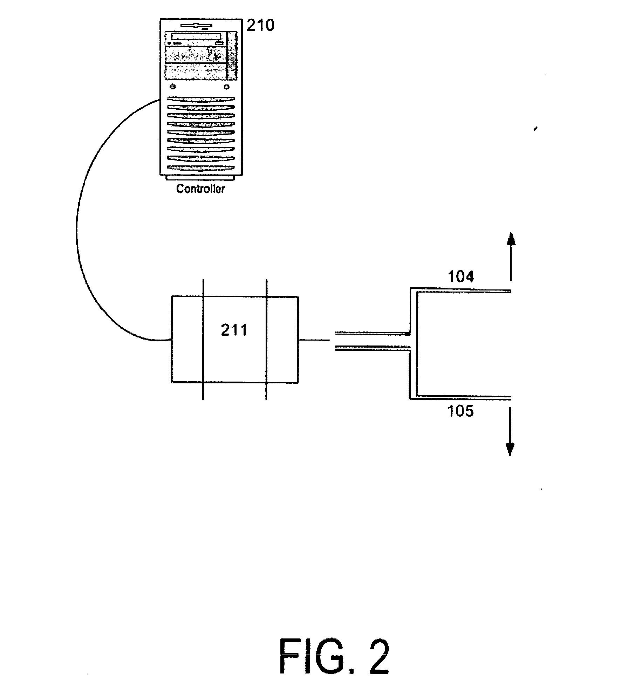

FIG. 2 illustrates a diagram of apparatus that can be utilized to implement some embodiments of the present invention.
FIG. 3 includes a chart to illustrate a prior art pry velocity versus time profile.
FIG. 4 includes a chart to illustrate a pry velocity versus time profile according to the present invention.
FIG. 5 includes a chart illustrating a decrease in edge defects trough implementation of the present invention.
FIG. 6 is illustrates a pallet that may be used in implementations of the present invention.
FIG. 7 illustrates pry fingers used in conjunction with the pallet in some embodiments of the present invention.
FIG. 8 illustrates processing stations connected with transport mechanisms and linked to a controller.
FIG. 9 illustrates a processor that may be used in some embodiments of the present invention.

### DETAILED DESCRIPTION OF THE INVENTION

The present invention provides methods and apparatus useful to separate two mold halves from each other, subsequent to polymerization of a lens forming monomer within the mold halves. According the present invention, separation of the two mold pieces is carefully controlled so that the separation speed is increased at specific stages of the separation. The increased separation speed results in less damage to the ophthalmic lens caused by the mold separation process.

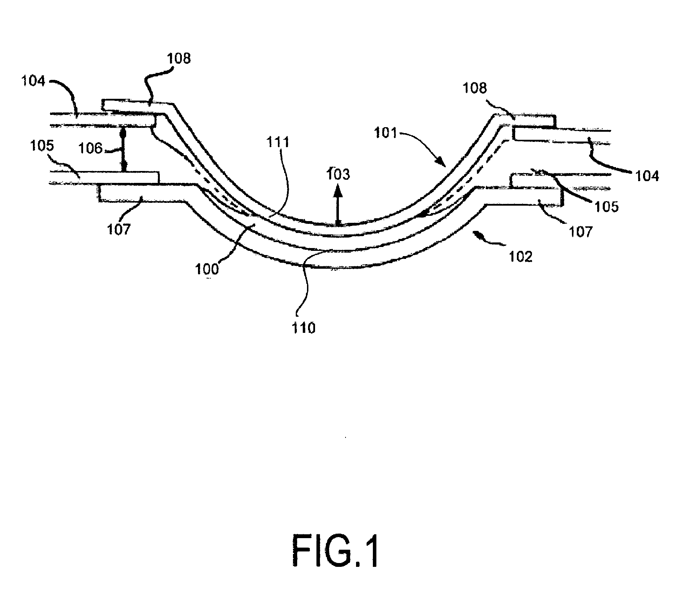

Referring now to Fig. 1, a block diagram is illustrated of an ophthalmic lens 100, such as a contact lens, and mold parts 101-102 used to form the ophthalmic lens 100 (prior art). Fig. 1 illustrates the mold parts 101-102 in a position during mold separation. In some typical embodiments, the mold parts will include a back surface mold part 101 and a front surface mold part 102. As used herein, the term "front surface mold part" refers to the mold part whose concave surface 110 is used to form what will be the front surface of the ophthalmic lens. Similarly, the term "back surface mold part" refers to the mold part 101 whose convex surface 111 forms what will be the back surface of the ophthalmic lens 100. In some embodiments, mold parts 101 and 102 are of a concavo-convex shape, preferably including planar annular flanges 107 and 108, respectively, which surround the circumference of the uppermost edges of the concavo-convex regions of the mold parts 101-102.

Typically, the mold parts 101-102 are arrayed as a "sandwich". The front surface mold part 102 is on the bottom, with the concave surface 110 of the mold part facing upwards. The back surface mold part 101 is disposed symmetrically on top of the front surface mold part 102, with the convex surface 111 of the back surface mold part 101 projecting partially into the concave region of the front surface mold part 102. Preferably, the back surface mold part 101 is dimensioned such that the convex surface 111 thereof engages the outer edge of the concave surface 110 of the front mold part 102 throughout its circumference, thereby cooperating to form a sealed mold cavity in which the lens 100 is formed.

Each front curve mold part 102 and back curve mold part 101 additionally include respective circumferential flanges 107-108 formed at the circumferential periphery of each lens mold portion 101-102 to facilitate the prying apart of the front curve mold part 102 from the back curve mold part 101.

In some embodiments, the mold parts 101-102 are made of thermoplastic and are transparent to actinic radiation, by which is meant that at least some, and preferably all, radiation of an intensity and wavelength effective to initiate polymerization of the lens forming resin or monomer in the mold cavity can pass through the mold parts 101-102. Actinic radiation can include, for example, ultraviolet radiation.

Mold parts can therefore be made of, for example, polystyrene, polyvinylchloride, polyethylene, polypropylene, polyolefin, copolymers or mixtures of styrene with acrylonitrile or butadiene, polyacrylonitrile, polyamides, polyesters, and the like.

During formation of a lens, the lens surface 103 will typically adhere to the mold part surfaces 110-111 binding the front curve mold part 101 to the back curve mold part 102. The steps of the present invention facilitate separation of the front curve mold part 101 from the back curve mold part 102. Previously, separation resulted in a significant number of defects to lenses 100 due to tearing or other damage to the lens during the separation.

The present invention provides an automated means to mechanically and reliably pry the mold halves apart in a consistent and reliable manner to thereby enhance the production of defect free lenses, and minimize the tearing of the lens or the breakage of the lens mold parts.

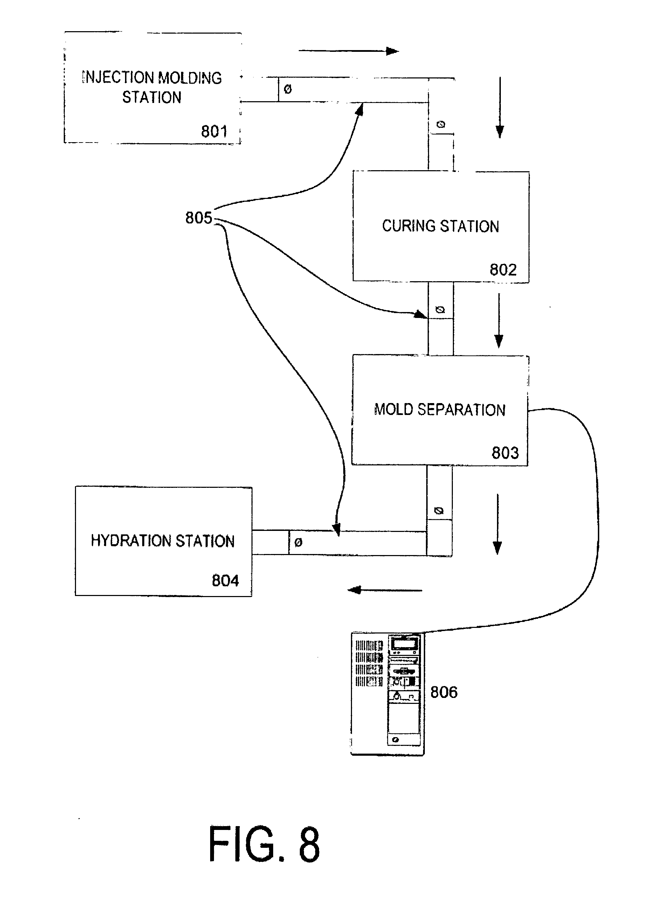

Referring now to Fig. 8, a block diagram is illustrated of apparatus contained in processing stations 801-804 that can be utilized in implementations of the present invention. In some preferred embodiments, processing stations 801-804 can be accessible to ophthalmic lenses via a transport mechanism 805. The transport mechanism 805 can include, for example, one or more of: a robot, a conveyor and a rail system in conjunction with a locomotion means that may include, a conveyor belt, chain, cable or hydraulic mechanism powered by a variable speed motor or other known drive mechanism (not shown).

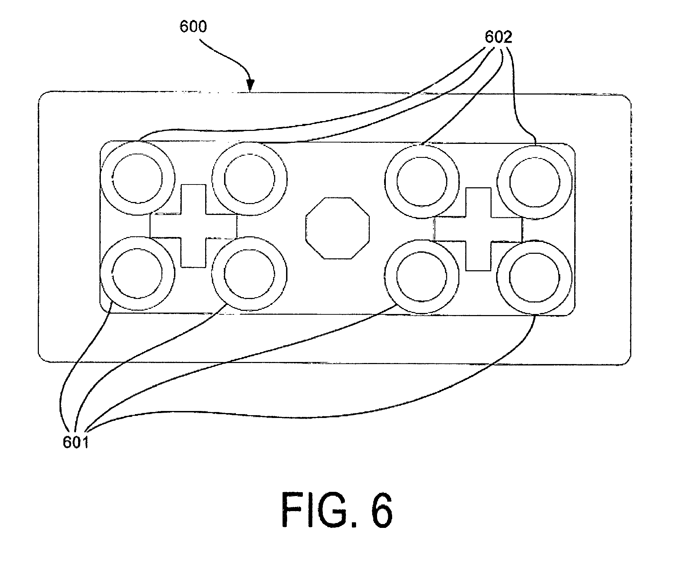

Each of the transport mechanisms 805 carry a series of pallets 600, generally illustrated at Fig. 6, 600, which provide support and registration for a plurality of contact lens molds 601-602 carried therein.

Referring now again to Fig. 8, pallets 600 containing the contact lens molds are conveyed along transport mechanisms 805 in the direction indicated by the arrows. Each of the pallets 600 can be moved by the transport mechanism 805 between two or more processing stations 801-804 and positioned at each respective station 801-804 to be acted upon according to the purpose of the station. A computer or other controller 210 can be operatively connected to the processing stations 801-804 to monitor and control processes at each station 800-804 and also monitor and control the transport mechanism 805 to coordinate the movement of lenses between the process stations 801-804.

Processing stations 801-804 can include, for example, a filling station 801. At the filling station 801, injection molding apparatus deposits a quantity of a polymerizable composition, or monomer, into the front curve mold portion 102 and preferably completely covers the mold surface 111. The monomer should comprise any material or mixture of materials, which upon polymerization yields an optically clear, integral shape-sustaining contact lens or contact lens precursor. By "precursor" is meant an object which has the desired relative dimensions and which upon subsequent hydration in water or buffered isotonic saline aqueous solution can be worn as a contact lens. Examples of such compositions abound in this field and are readily ascertainable by reference to standard literature sources. Examples can include: copolymers based on 2-hydroxyethyl methacrylate ("HEMA") and one or more comonomers such as 2-hydroxyethyl acrylate, methyl acrylate, methyl methacrylate, vinyl pyrrolidone, N-vinyl acrylamide, hydroxypropyl methacrylate, isobutyl methacrylate, styrene, ethoxyethyl methacrylate, methoxy triethyleneglycol methacrylate, glycidyl methacrylate, diacetone acrylamide, vinyl acetate, acrylamide, hydroxytrimethylene acrylate, methoxyethyl methacrylate, acrylic acid, methacrylic acid, glyceryl methacrylate, and dimethylamino ethyl acrylate.

In some embodiments, it is preferred to polymerize the monomers in an atmosphere with controlled exposure to oxygen, including, in some specific embodiments, an oxygen-free environment. Controlled exposure to oxygen can limit the amount of oxygen that is available to enter into side reactions, which interfere with the desired optical quality and clarity of the polymerized lens. Oxygen may also disturb the reproducibility of the desired parameters of the lens. In some embodiments, the lens mold halves are also prepared in an atmosphere, which has limited oxygen or is oxygen-free; to avoid the risk that oxygen absorbed in or on the mold half would react with the polymerizable composition.

A curing station 802 can include apparatus for polymerizing the monomer. Polymerization is preferably carried out by exposing the monomer to polymerization initiating conditions. Curing station 802 therefore includes apparatus that provide a source of initiation of monomer deposited into the front curve mold 102. The source of initiation can include for example, one or more of: actinic radiation and heat. Actinic radiation can be sourced from bulbs under which the mold assemblies travel. The bulbs can provide, for example, an intensity of ultraviolet radiation (measured as, for instance, mW/cm²) in a given plane parallel to the axis of the bulb that is sufficient to initiate polymerization.

A mold separation station 803 can include apparatus to separate the back curve mold part 101 from the front curve mold part 102 as described more completely below.

Following separation, the transport mechanism 805 typically conveys the lens to a hydration station 804 that includes, for example, at least one of a hydration tower or a submersion vehicle capable of exposing the ophthalmic lenses 100 to a hydration solution. Detailed descriptions of various embodiments of hydration apparatus utilizing a downward flow are disclosed in U.S. Patent 6,207,086. Other embodiments can also include submersion of the ophthalmic lenses into a hydration tank. For example, front curve mold parts 102 containing lenses 100 can be sandwiched between a mold carrier and a plate to form a hydration carrier (not shown). Robotic assemblies can immerse each hydration carrier in a hydration solution.

The mold separation apparatus 803 physically pries the back curve mold part 101 from the front curve mold part 102 of each contact lens mold 101-102 to physically expose each contact lens situated in the lens mold 101-102 for conveyance to a hydration station 804. The prying process occurs under carefully controlled conditions so that the back curve mold part 102 will be separated from the front curve mold part 102 without destroying the integrity of the lens 100 formed in the lens mold.

As shown in Fig. 1, in some embodiments, the gap 106 located between the circumferential edge portions 107-108 of each lens mold assembly 101-102 is approximately 1 mm to 3 mm wide. The gap 106 is preferably 2 mm wide for adequately receiving prying fingers 104-105 of the demolding assemblies 803 which are inserted between the mold parts 101-102 for prying apart of the back curve mold part 101 from the front curve mold part 102.

Embodiments of the demolding apparatus 803 illustrated in Fig. 1, includes paired sets of pry tools 104-105, each set of pry tools 104-105 corresponding to a respective pallet 601-602.

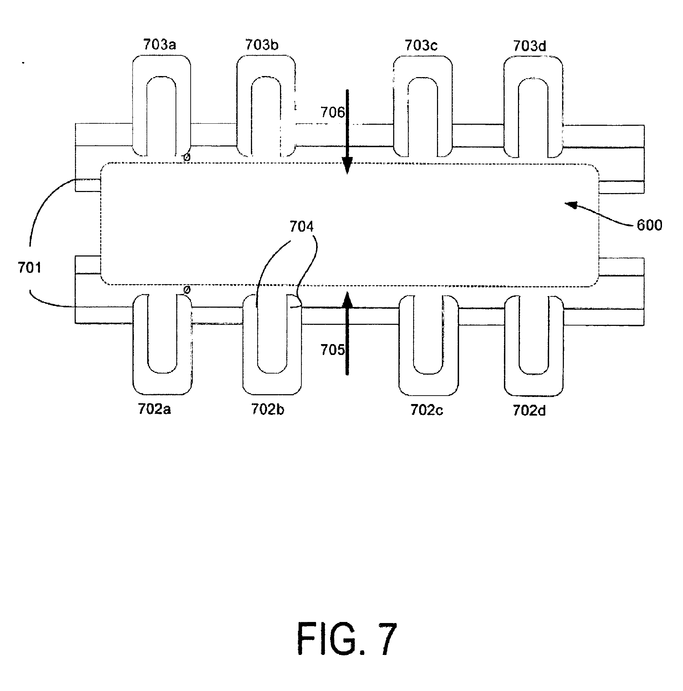

Referring now to Fig. 7, a first set of four pry tools 702a-d and a second set of four pry tools 703a-d are located on respective opposite sides of the transport mechanism 805 to enable the removal of the back curve lens mold part 101 from the front curve lens mold part 102 for each of eight lens molds parts pairs 601 situated in the registered pallet 600. Each set of tools 702 a-d to703 a-d include upper fingers 104 and lower fingers 105 which separate vertically, one from the other, in a manner to be herewith described in detail.

The description that follows is directed to one paired group of pry tools, e.g., 702a-703a, but it is understood that the following description applies equally to the other paired group of pry tools 702b-d to 703b-d for the pallet 600 conveyed on conveyor or other transport mechanism 805.

In some embodiments, each of the respective group of pry tools 702a-d to703a-d consist of a bottom group of contiguously connected U-shaped members 105 having finger portions 704 thereof, and a top group 104 of contiguously connected U-shaped mounting members having finger portions 704 thereof. The top group of pry finger can be situated directly above the bottom group of pry fingers 105 and may be simultaneously inserted into the gap 106 illustrated in Fig. 1 defined and between the circumferential edge portion 108 of the back curve and the circumferential edge portion 107 of the front curve as described above.

In some preferred embodiments, each group of pry tools 104-105 is made of stainless steel and each set of fingers 702-703 range from 0.3 mm to 1.5 mm in thickness so that they may be precisely inserted within gap 106. The top and bottom fingers 104-105 of pry tools 702a-b to 703a-b travel in opposite directions in respect to each other to perform a prying operation. For example, top fingers 104 can travel in an upwardly vertical direction and bottom fingers 105 can move in a downwardly vertical direction to cause the prying operation.

The clearance between the pallet 600 and the lower pry finger is about 0.05-0.4 mm and in some preferred embodiments clearance between the pallet 600 and the lower pry finger is about nominally 0.1. The clearance between the upper and lower pry finger 106) is about 0.1-0.4 mm and in some preferred embodiments about 0.2 mm.

During operation of a mold separation station 803, each set of pry fingers 104-105 are extended, as indicated by the arrows 705, for insertion between the gaps formed between the respective front curve mold part 102 and back curve mold part 101 for each of the four lens molds situated 702a-702d on one side of the pallet 600. Likewise, each set 104-105 of pry fingers are extended for insertion between the gaps formed between the respective front curve mold part 102 and back curve mold part 101 of each of the four lens molds 703a-703d situated on the opposite side of the pallet 600 as illustrated by arrow 706.

Each set of pry tools 702a-702d to 703a-703d are inserted in a manner such that the fingers 704 of the bottom group 105 of pry tools thereof anchors the circumferential or annular rim portion 107 of the front curve of the lens mold 102 to the surface of the pallet 600 so that when the top group of pry tools 104 and fingers 704 thereof vertically separate as per arrow 103, the back curve mold portion 101 of the lens mold 101-102 will separate from the front curve mold portion 102 without destroying the integrity of the ophthalmic lens 100 or either of the mold parts 101-102.

According to the present invention, a computerized controller apparatus 210 controls the lifting motion between pry fingers 104 and 105. The lifting motion of the back curve mold portion 101 tends to bow the back curve mold portion 101 inwardly, which will initiate a bilateral separation of the back curve mold portion 101. This, in turn, initiates a standing wave in the material which travels downwardly along the convex surface of the back curve mold half. If the upward movement of the back curve mold half 101 does not exceed the downward propagation rate of the standing wave in the material, then the back curve mold portion 101 will generally be lifted cleanly with minimal chance of tearing the lens.

As the back curve mold portion 101 is lifted free of the lens 100 and the front mold part 102, it carries with it the excess HEMA ring (not shown) which, in some embodiments, may be preferentially retained on the back curve. Following separation of the mold parts 101-102, the upper and lower sets of pry fingers 104-105 are retracted laterally in opposite directions to allow each pallet 600 containing up to eight front curve lens mold parts 102 and a respective contact lens 100 therein, to continue along its respective transport 805 path.

According to the present invention, the velocity of the vertical movement of the upper pry fingers 104 from the lower pry fingers 105 is carefully controlled as the upper pry fingers 104 approach the upper mold part circumferential edge 108 and while it acts to separate the upper mold part 101 from the lower mold part 102 and the lens 100.

The present invention teaches a multiple speed control of the pry fingers to maximize efficiency of the ophthalmic lens manufacturing and reduce damage to lenses that results from mold part 101-102 separation.

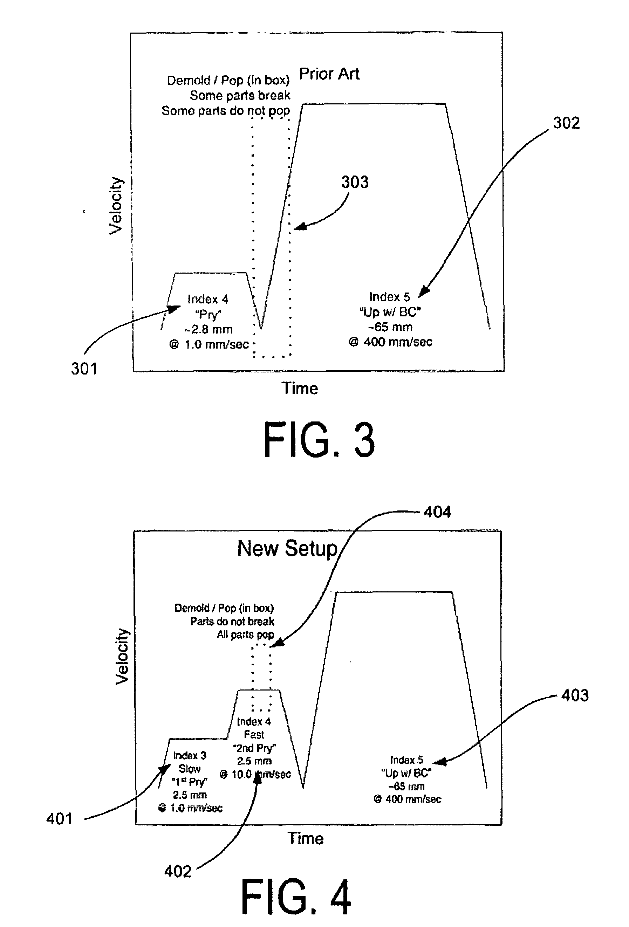

Referring now to Fig. 3a, in the prior art, pry movement / profile consisted of a singe-stage pry. Fig. 3A illustrates pry velocity (y-axis) vs. time (x-axis) profile (not to scale). In some embodiments, the lower pry finger 105 is fixed in place and the upper pry finger 104 moves up, as indicated by the direction of arrow 103, towards the back curve circumferential edge portion 108 at a speed of 1.0 mm/sec (range: 0.5 - 3.0 mm/sec) as illustrated at Fig. 3A, Index 4. In some preferred embodiments the upper pry finger 104 moves up at a speed of 1.0 - 1.2 mm/sec.

After the upper pry finger 104 makes contact with the back curve circumferential edge portion 108, the back curve mold part 101 will begin to flex. According to the present invention, separation of the back curve mold part 101 from the ophthalmic lens 100 can be accomplished via different velocities of separation of the pry fingers 104-105.

Referring now to Fig. 3, separation according to the prior art is illustrated. Velocity (y-axis) of the pry finger 104-105 movement is plotted vs. time (x-axis) profile (not to scale). Once the upper pry finger 104 moves upward high enough (typically 2.7 - 3.0 mm), the back curve mold part 101 separates from the ophthalmic lens 100 at a relatively slow speed of Index 4 301. The next movement is the back curve takeaway illustrated at Index 5 302.

After the upper pry finger 104 has moved against the back curve circumferential edge portion 108 a sufficient distance (i.e. 2.5 - 2.8 mm after contact) the motion of the upper pry finger 104 transitions into the faster takeaway speed, such as, for example as illustrated by Index 5. In some embodiments, the separation of the back curve mold part 101 from the ophthalmic lens 100 occurs in one or more of: during Index 4 and during the acceleration of Index 5. Separation this is illustrated by the box 303 on Fig 3.

Referring now to Fig. 4, separation according to the present invention is illustrated. Fig. 4 illustrates a velocity (y-axis) vs. time (x-axis) profile (not to scale). Velocity of the movement of the pry fingers 104-105 can be controlled by automated mechanisms, such as, for example, by one or more of: an electric servo robot and an air powered stepper motor controlled by an electronic controller, such as a computer. For example in some embodiments, an Emerson EN-2-4 controller can be used to control an Emerson NTM-212-TBNS-0000 stepper motor. The stepper motor can actuate a ball screw to create the desired movement in the pry fingers 104-105.

In some embodiments the lower pry finger 105 can be fixed in place and the upper pry finger 104 can move up (direction indicated by 103) towards the back curve circumferential edge portion at a speed of about 1.0 mm/sec (range: 0.5 - 3.0 mm/sec) to engage the back curve mold part, first stage upward travel can be, for example, about 2.5 mm (range 2.3 - 2.8 mm) which can be seen at Index 3 403. A second stage of upward travel can commence at a distance of about 2.5 mm and upward. In some preferred embodiments, the second will commence after the pry fingers have engaged the circumferential surfaces 104-105. During the second stage, the upper pry finger can accelerate to a relatively faster speed, such as for example a speed of about 10 mm/sec (range 5-50 mm/sec) for a distance of about, for example, 2.5 mm (range 1 - 5mm) as seen on Index 4 402. The separation of the back curve mold part 101 from the ophthalmic lens 100 occurs while the upper pry finger 104 is moving at the relatively faster speed, 404 illustrates a point of total separation.

Following separation, a back curve mold part 101 take away stage can be executed. During the take away stage, the upper pry finger 104 continues to move upward 103, but now at a speed of about 100-1000 mm/sec, in some preferable embodiments at about 400 mm/sec, to clear the back curve mold part 101 away from the front curve mold part 102. During this stage, the mold parts 101-102 have separated and the ophthalmic lens 100 will continue in the front curve mold part 102.

Following take away, automated means, such as, for example, cylinders, retract the pry fingers 104 105 away from the pallet 600, and the pallet 600 is transported out of mold separation.

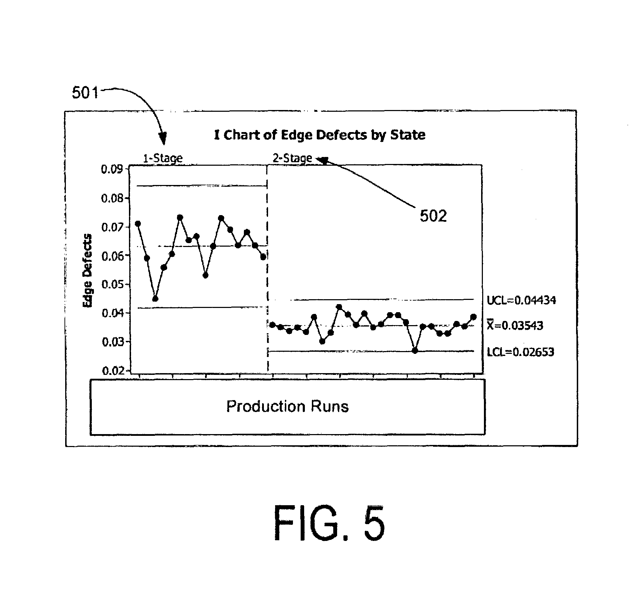

Figure 5 illustrates a representation of the average edge defects for manufacturing production runs. With the prior art 1-Stage pry profile 501; the average rate of edge defects was 6.2% of the lenses 100. After the implementation of the 2-Stage pry profile 502, the average rate of edge defects dropped to 3.5% of the lenses manufactured.

### Processing Systems

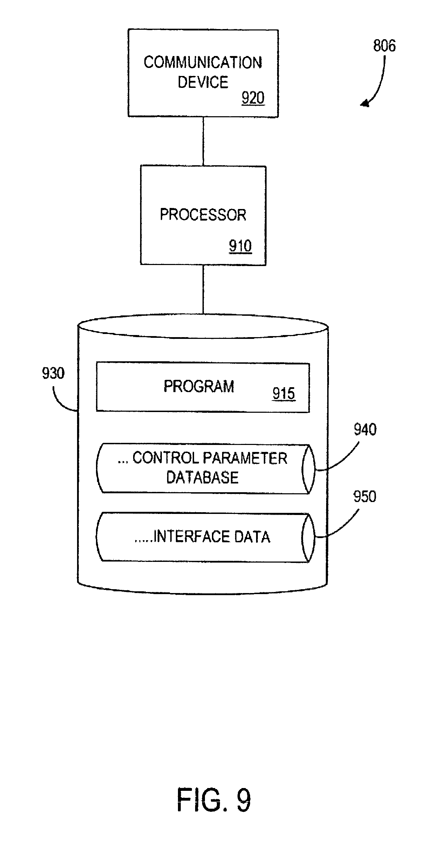

Referring now to Fig. 9, a block diagram illustrates some exemplary embodiments of a controller 210 suitable for use in the present invention. The controller 603 can include a processor 910 coupled to a communication device 920 configured to communicate via a communication network with various apparatus included in the processing stations 801-804 in order to control the operation of the respective stations 801-804.

The processor 910 is also in communication with a storage device 930. The storage device 930 may comprise any appropriate information storage device, including combinations of magnetic storage devices (e.g., magnetic tape and hard disk drives), optical storage devices, and/or semiconductor memory devices such as Random Access Memory (RAM) devices and Read Only Memory (ROM) devices.

The storage device 930 can store a control program 940 for controlling the processor 910 and generating output to be transmitted via the communication network to the respective processing stations 801-804. The processor 910 performs instructions of the control program 940, and thereby operates in accordance with the present invention. For example, the processor 540 may receive information descriptive of a first, second or third separation speed and generate appropriate control data to cause the mold separation station 803 to separate two mold parts at a appropriate speed. The processor 910 may also transmit information via the communication device 920 to the mold separation station 803.

The storage device 930 can also store data related to commands or interface control language specific to the respective processing stations 801-804, in a control parameter database 940 and interface data 950. Other data may also be stored, as needed. The illustration and accompanying description of the multi-stage ophthalmic lens demold related database presented herein is exemplary, and any number of other database arrangements can be employed besides those suggested by the figures.

While the invention has been particularly shown and described with respect to the preferred embodiments thereof, it will be understood by those skilled in the art that the foregoing and other changes in form and details may be made therein without departing from the spirit and scope of the invention, which should be limited only by the scope of the appended claims.

## Claims

1. An apparatus for separating ophthalmic lens mold parts subsequent to polymerization of a contact forming monomer contained within the mold parts, the apparatus comprising:
a first set of pry fingers and a second set of pry fingers;
a positioning means for situating the first set of pry fingers and the second set of pry fingers between an upper mold part and a lower mold part joined together through adhesion of an ophthalmic lens situated between the first mold part and the second mold part; and
a mechanized means for moving at least one set of: the first set of pry fingers and the second set of pry fingers, apart from each other at a velocity specified by an automated controller,
wherein the automated controller causes the mechanized means to move at least one set of: the first set of pry fingers and the second set of pry fingers, apart from each other at a controlled first velocity up until a first predetermined distance has been travelled by the at least one of: the first set of pry fingers and the second set of pry fingers; and a second velocity greater than the first velocity up until a second predetermined distance has been travelled.

2. The apparatus of claim 1 wherein the first velocity comprises at least about 0.5 mm/sec and the second velocity comprises between 5 and 50 mm/sec.

3. The apparatus of claim 2 wherein the first velocity comprises between 3.0 mm/sec and 6.0 mm/sec.

4. The apparatus of any one of claims 1 to 3 wherein the upper mold part and the lower mold part each comprise a circumferential edge portion and the first predetermined distance is greater than the distance required to make the pry fingers contact each of the circumferential edge portions.

5. The apparatus of claim 4 wherein the first predetermined distance comprises greater than about 0.2 mm.

6. The apparatus of claim 5 wherein the first predetermined distance comprises between 2.3 to 2.8 mm and the second predetermined distance comprises between 2.3 - 2.8 mm.

7. The apparatus of any one of claims 1 to 6 additionally comprising a mechanized means for moving at least one set of: the first set of pry fingers and the second set of pry fingers, apart from each other a predetermined third distance subsequent to traveling the second predetermined distance and at a controlled third velocity greater than the second velocity.

8. The apparatus of claim 7 wherein the third velocity comprises between 100 mm/sec and 1000 mm/sec.

9. The apparatus of any one of claims 1 to 8 wherein the mechanized means for moving at least one set of: the first set of pry fingers and the second set of pry fingers, apart from each other at a velocity specified by an automated controller comprises an electric powered stepper motor.

10. The apparatus of any one of claims 1 to 8 wherein the mechanized means for moving at least one set of: the first set of pry fingers and the second set of pry fingers, apart from each other at a velocity specified by an automated controller comprises an air powered stepper motor.

11. The apparatus of any one of claims 1 to 10 wherein ophthalmic lens comprises a silicone based polymer.

12. A method for separating a first ophthalmic lens mold part from a second ophthalmic lens mold part, the method comprising:
depositing ophthalmic lens forming resin between the first mold part and the second mold part;
polymerizing the ophthalmic lens forming resin thereby causing the first mold part and the second mold part to adhere to each other;
positioning a first set of pry fingers and the second set of pry fingers between the first mold part and the second mold part;
moving at least one set of: the first set of pry fingers and the second set of pry fingers, apart from each other at a controlled first velocity until a first predetermined distance has been travelled by the at least one of: the first set of pry fingers and the second set of pry fingers; and
moving at least one set of: the first set of pry fingers and the second set of pry fingers, apart from each other at a controlled second velocity greater than the first velocity up until a second predetermined distance has been travelled.

13. The method of claim 12 additionally comprising the step of moving, subsequent to the second predetermined distance being travelled, at least one set of: the first set of pry fingers and the second set of pry fingers; apart from each other a third predetermined distance at a third velocity greater than the second velocity.

14. The method of claim 12 or claim 13 wherein moving the at least one set of: the first set of pry fingers and the second set of pry fingers; apart from each other, is performed by a mechanized apparatus controlled by a computer processor operative with software stored on a computer readable medium.

15. The method of any one of claims 12 to 14 wherein the first mold part and the second mold part each comprise a circumferential edge portion and the first predetermined distance is greater than the distance required to make the pry fingers contact each of the circumferential edge portions.

16. The method of any one of claims 12 to 15 wherein the first predetermined distance comprises between 2.3 to 2.8 mm and the second predetermined distance comprises between 2.0 - 3.0 mm.

17. The method of any one of claims 12 to 16 wherein the moving of at least one set of: the first set of pry fingers and the second set of pry fingers, apart from each other is accomplished with a apparatus comprising an electric stepper motor operatively attached to a ball screw linked to at least one set of: the first set of pry fingers and the second set of pry fingers.

18. The method of claim 17 wherein the first set of pry fingers is fixed in place and the second set of pry fingers is operatively attached to the ball screw and moved as the ball screw is operated.

19. Computer apparatus to facilitate separation of a first mold part and a second mold part utilized to form an ophthalmic lens, the computerized apparatus comprising:
a computer processor operatively connected to a storage medium for digital data; and
executable software stored on the storage medium and executable on demand, the software being operative with the computer processor to cause ophthalmic lens processing stations to carry out the method of any one of claims 12 to 18.
